# EUROPEAN PATENT SPECIFICATION

(11) **EP 2 957 737 B1**
(45) Date of publication and mention of the grant of the patent: **21.03.2018**
(21) Application number: 14751218.0
(22) Date of filing: 17.01.2014
(51) Int. Cl.: F01N 3/08, F01N 3/24, F02D 21/08, F01N 3/20, F01N 9/00

(54) **ENGINE EXHAUST-GAS PURIFICATION DEVICE**
MOTORABGASREINIGUNGSVORRICHTUNG
DISPOSITIF DE PURIFICATION DE GAZ D'ÉCHAPPEMENT DE MOTEUR

(30) Priority: 14.02.2013 JP 2013026462
(43) Date of publication of application: 23.12.2015
(73) Proprietor: Mitsubishi Jidosha Kogyo Kabushiki Kaisha, Tokyo 108-8410 (JP)
(72) Inventor: TSUNEKAWA, Kiyoka, Tokyo 108-8410 (JP)
(74) Representative: Vossius & Partner Patentanwälte Rechtsanwälte mbB
(86) International application number: PCT/JP2014/050801
(87) International publication number: WO 2014/125870

(56) References cited:
- EP-A1- 2 426 327
- JP-A- 2008 291 671
- JP-A- 2012 233 414

## Description

### Technical Field

The present invention relates to an exhaust gas purifying apparatus of an engine, and more particularly to an exhaust gas purifying apparatus of an engine including a selective reduction catalyst and an exhaust gas recirculation passage.

### Background Art

EP 2 426 327 A1 relates to an exhaust purification device for an engine. The device comprises an ammonia supply system including an ammonia supply injector for supplying ammonia to a combustion chamber and a control unit for controlling the ammonia supply injector, and a NOx purification system provided in an exhaust passage and including a Selective Catalytic Reduction catalyst being able to fulfill a function for purifying NOx under the presence of the ammonia.

JP 2012 233414 A discloses a method and a device for controlling operation of an internal combustion engine using both an Selective Catalytic Reduction (SCR) system and an Exhaust Gas Recirculation (EGR) system. The device comprises cooling water circulation paths circulating cooling water between a radiator and an engine block, and a branch cooling water circulation path branched off from one of the cooling water circulation paths and connected to an EGR cooler provided in an EGR path. The device is configured to operate under three different modes.

JP 2008 291671 A relates to an exhaust gas recirculation control device of an internal combustion engine. An exhaust pipe and an intake introducing pipe are provided which are interconnected to each other by a low-pressure EGR passage. A low-pressure EGR control valve is arranged within the low-pressure EGR passage. A NOx selection reduction catalyst is arranged within an exhaust passage located downstream of the low-pressure EGR passage. A supply control valve is arranged within the exhaust passage for supplying the NOx selection reduction catalyst at an upstream location. A urea water solution is supplied from the supply control valve. When the urea water solution is supplied from the supply control valve, an opening degree of the low-pressure EGR control valve is corrected to be reduced compared with when urea solution is not supplied.

The exhaust passage of the engine includes an exhaust gas purifying apparatus for purifying an exhaust gas. For example, there is an exhaust passage of a diesel engine including a diesel particulate filter and having a function to collect particulate matter (PM) from the exhaust gas. There is further known an exhaust passage of the diesel engine including an oxidation catalyst on an upstream side of the diesel particulate filter, in which a fuel is supplied to the oxidation catalyst to burn the fuel to raise an exhaust gas temperature, thereby to burn and remove the PM collected in the diesel particulate filter. There is still further known an exhaust passage of the diesel engine including a selective reduction catalyst for reducing and removing NOx (nitrogen oxides) in the exhaust gas using a reducing agent such as urea water.

In addition, there is known an exhaust gas recirculation apparatus for use as a method of reducing the amount of NOx emissions from the engine. The exhaust gas recirculation apparatus includes a communication passage communicating an exhaust passage with an intake passage so as to recirculate some of the exhaust gases back into the intake passage, thereby suppress a combustion temperature and suppress NOx generation.

For example, Patent Document 1 includes a selective reduction catalyst as described above so that urea water (ammonia precursor) is supplied to the selective reduction catalyst thereby to allow the selective reduction catalyst to reduce and remove NOx; and an exhaust gas recirculation apparatus that reduces NOx generation when the selective reduction catalyst is in an inactivated state.

### Prior Art Document

### Patent Document

Patent Document 1: Japanese Patent No. 4007046

### Disclosure of the Invention

### Problems to be solved by the Invention

The above Patent Document 1 selectively uses NOx reduction removal by the selective reduction catalyst or NOx generation reduction by the exhaust gas recirculation apparatus based on an operating state of the engine. For example, at high-speed high-load, urea water is used to allow the selective reduction catalyst to reduce and remove NOx, while at low-speed low-load, the urea water supply is stopped to allow the exhaust gas recirculation apparatus to reduce NOx emissions.

However, the Patent Document 1 may not sufficiently achieve the NOx reduction effect because one of the NOx reduction removal by urea water supply and the NOx emission reduction by the exhaust gas recirculation apparatus is selectively used based on the operating state of the engine.

In addition, there is a possibility that even if the engine is in high-speed high-load operating state, the exhaust gas may be at low temperature like at transient operation, in which case, the urea water supplied into the exhaust passage may not be sufficiently hydrolyzed and may flow into the selective reduction catalyst, thus resulting in a possibility that urea may be deposited or discharged outside the vehicle.

The present invention has been made to solve such problems, and an object of the present invention is to provide an exhaust gas purifying apparatus for an engine enabling both exhaust gas purification by ammonia precursor supply and exhaust gas purification by exhaust gas recirculation, the exhaust gas purifying apparatus of the engine capable of suppressing wasteful supply of the ammonia precursor while securing exhaust gas purification performance.

### Means for Solving the Problems

In order to achieve the above object, a first aspect of the present invention is directed to an exhaust gas purifying apparatus of an engine comprising: a selective reduction catalyst provided in an exhaust passage of the engine; an ammonia precursor supply unit that supplies an ammonia precursor to an upstream side of the selective reduction catalyst and breaks down the ammonia precursor in the exhaust passage to cause the generated ammonia to flow into the selective reduction catalyst, thereby to allow the selective reduction catalyst to reduce and purify nitrogen oxides in exhaust gas of the engine; an exhaust gas recirculation passage that introduces the exhaust gas from the exhaust passage and recirculates the exhaust gas to an intake passage of the engine; an exhaust gas recirculation rate control unit that controls a flow rate of the exhaust gas recirculated into the intake passage through the exhaust gas recirculation passage; a control unit that sets a ratio between a supply rate of the ammonia precursor and a recirculation rate of the exhaust gas set based on an operating state of the engine, and, based on the ratio, controls the operation of the ammonia precursor supply unit and the exhaust gas recirculation rate control unit; an exhaust gas temperature detection unit that detects an exhaust gas temperature in the exhaust passage between the ammonia precursor supply unit and the selective reduction catalyst; and a change unit that changes the ratio between the supply rate of the ammonia precursor and the recirculation rate of the exhaust gas set by the control unit so that a reduction in the exhaust gas temperature detected by the exhaust gas temperature detection unit reduces the supply rate of the ammonia precursor and increases the recirculation rate of the exhaust gas.

In a second aspect of the present invention according to the first aspect of the present invention, the control unit sets the ratio so as to use both supply of the ammonia precursor and recirculation of the exhaust gas through the exhaust gas recirculation passage in a predetermined operating region defined by rotational speed and load of the engine, and the change unit changes the ratio based on the exhaust gas temperature detected by the exhaust gas temperature detection unit in the predetermined operating region.

In a third aspect of the present invention according to the second aspect of the present invention, in the predetermined operating region, the change unit sets the recirculation rate of the exhaust gas through the exhaust gas recirculation passage to a maximum limit and changes the ratio so as to compensate for a shortage of reduction in the nitrogen oxides by recirculation of the exhaust gas by exhaust gas purification by supply of the ammonia precursor.

### Advantageous Effects of the Invention

According to the exhaust gas purifying apparatus of the engine of the present invention, a reduction in the exhaust gas temperature inside the exhaust passage between the ammonia precursor supply unit and the selective reduction catalyst reduces the supply rate of the ammonia precursor and increases the recirculation rate of the exhaust gas, which can suppress wasteful supply of the ammonia precursor such as causing the ammonia precursor to flow into the selective reduction catalyst without being broken down. Thus, the present invention can suppress the ammonia precursor from being discharged to a downstream side from the selective reduction catalyst, can suppress the urea from depositing on the selective reduction catalyst and in the exhaust passage at a downstream side thereof, and can suppress the amount of consumption of the ammonia precursor.

### Brief Description of the Drawings

FIG. 1 is a schematic configuration view of an intake exhaust system of a diesel engine according to an embodiment of the present invention.
FIG. 2 is explanatory drawing illustrating a use region of an exhaust gas purifying apparatus according to the embodiment of the present invention.
FIG. 3 is a flowchart illustrating an operation control procedure for a urea water injector and an exhaust gas recirculation valve based on an exhaust gas temperature.
FIG. 4 is a flowchart illustrating an operation control procedure for a urea water injector and an exhaust gas recirculation valve based on an exhaust gas temperature.

### Mode for Carrying out the Invention

Hereinafter, the embodiment of the present invention will be described based on the drawings.

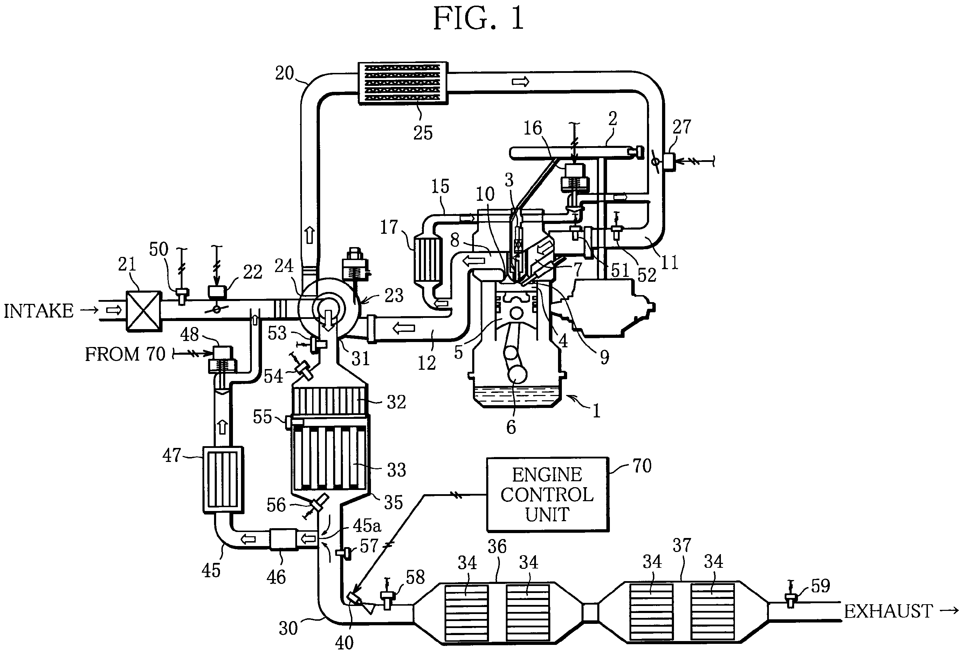

FIG. 1 is a schematic configuration view of an intake exhaust system of a diesel engine (hereinafter referred to as an engine 1) according to a embodiment to which an exhaust gas purifying apparatus of the present invention is applied.

The engine 1 is mounted on a vehicle as a drive source and is a multi-cylinder in-cylinder direct injection type engine (for example, a common rail diesel engine) including a turbocharger 23. More specifically, the engine 1 is configured such that a high pressure fuel accumulated in a common rail 2 is supplied to a fuel injection nozzle 3 of each cylinder and the fuel can be injected from the fuel injection nozzle 3 into a combustion chamber 4 of each cylinder at any injection timing and injection quantity.

An up and down slidable piston 5 is provided in each cylinder of the engine 1. The piston 5 is coupled to a crankshaft 6 through a con rod. A flywheel is provided at one end portion of the crankshaft 6.

The combustion chamber 4 communicates with an intake port 7 and an exhaust port 8.

The intake port 7 includes an intake valve 9 for performing communication and blocking between the combustion chamber 4 and the intake port 7. The exhaust port 8 includes an exhaust valve 10 for performing communication and blocking between the combustion chamber 4 and the exhaust port 8.

An intake manifold 11 for distributing the intake air to each cylinder is provided upstream of the intake port 7 so as to communicate with the intake port 7. An exhaust manifold 12 for collecting the exhaust gas discharged from each cylinder is provided downstream of the exhaust port 8 so as to communicate with the exhaust port 8.

A high-pressure exhaust gas recirculation passage 15 for returning some of the exhaust gases back to the intake, namely, for introducing high-temperature high-pressure exhaust gases into the intake is provided between the intake manifold 11 and the exhaust manifold 12. An exhaust gas recirculation valve 16 for adjusting the amount of high-temperature high-pressure exhaust gas to be returned to the intake is interposedly provided at the high-pressure exhaust gas recirculation passage 15. An exhaust gas recirculation cooler 17 for cooling the exhaust gas to be introduced into the intake manifold 11 is provided at the high-pressure exhaust gas recirculation passage 15.

The intake manifold 11 is connected to an intake pipe 20 as an intake passage. The intake pipe 20 includes, in order from the upstream side to the intake manifold 11, an air cleaner 21 for removing dust in fresh air, an electronic control throttle valve 22 (exhaust gas recirculation rate control unit) for adjusting the flow rate of the low-pressure exhaust gas introduced from a low-pressure exhaust gas recirculation passage 45 to be described later while adjusting the flow rate of the fresh air, a compressor 24 of the turbocharger 23, an intercooler 25 for cooling the intake air compressed by the compressor 24 to a high temperature, and an electronic control throttle valve 27 for adjusting the flow rate of the exhaust gas introduced from the high-pressure exhaust gas recirculation passage 15.

An exhaust pipe 30 as an exhaust passage downstream of the exhaust manifold 12 includes, in order from the upstream side, a turbine 31 of the turbocharger 23, an oxidation catalyst 32 for oxidizing oxidizable components in the exhaust gas, a diesel particulate filter 33 for collecting and burning particulate matter mainly composed of graphite in the exhaust gas, and a selective reduction catalyst 34 for reducing and purifying nitrogen oxides (hereinafter referred to as NOx) in the exhaust gas using ammonia. Note that the oxidation catalyst 32 and the diesel particulate filter 33 are housed in the same casing 35 and are disposed in an engine room of the vehicle. Note also that the selective reduction catalyst 34 is divided into four portions, which are arranged two by two in series in casings 36 and 37 and are disposed under the floor of the vehicle.

A urea water injector 40 (ammonia precursor supply unit) for injecting and supplying urea water (ammonia precursor) is disposed in the exhaust pipe 30 between the diesel particulate filter 33 and the selective reduction catalyst 34 located most upstream. Urea water is supplied to the urea water injector 40 from an unillustrated urea water tank mounted on the vehicle. An injection position of the urea water injector 40 is set so that the urea water injected from the urea water injector 40 into the exhaust pipe 30 is sufficiently hydrolyzed by exhaust heat to generate ammonia so as to reach the selective reduction catalyst 34.

Further, a low-pressure exhaust gas recirculation passage 45 (exhaust gas recirculation passage) is provided so as to communicate the intake pipe 20 between an electronic control throttle valve 22 and the compressor 24 of the turbocharger 23 with the exhaust pipe 30 between the diesel particulate filter 33 and the urea water injector 40. The low-pressure exhaust gas recirculation passage 45 has a function to introduce (recirculate), into the intake, some of the low-temperature low-pressure exhaust gases passing through the turbine 31, the oxidation catalyst 32, and the diesel particulate filter 33.

The low-pressure exhaust gas recirculation passage 45 includes an exhaust gas recirculation filter 46 for removing foreign matter from the exhaust gas to return to the intake, an exhaust gas recirculation cooler 47 for cooling the exhaust gas to recirculate, and an exhaust gas recirculation valve 48 (exhaust gas recirculation rate control unit) for opening and closing the low-pressure exhaust gas recirculation passage 45.

An intake air temperature sensor 50 for detecting the temperature of the intake air (fresh air) is provided in the intake pipe 20 between the air cleaner 21 and the electronic control throttle valve 22. The intake manifold 11 includes an intake air temperature sensor 51 for detecting the temperature of the intake air flowing into the combustion chamber 4 of the engine 1 and an oxygen concentration sensor 52 for detecting the oxygen concentration in the intake air.

An oxygen concentration sensor 53 for detecting the oxygen concentration in the exhaust gas is provided in the exhaust pipe 30 between the turbine 31 and the oxidation catalyst 32.

An exhaust gas temperature sensor 54 for detecting the temperature of the exhaust gas flowing into the oxidation catalyst 32 is provided upstream of the oxidation catalyst 32 of the casing 35. An exhaust gas temperature sensor 55 for detecting the temperature of the exhaust gas flowing from the oxidation catalyst 32 is provided between the oxidation catalyst 32 and the diesel particulate filter 33 in the casing 35. In addition, an exhaust gas temperature sensor 56 for detecting the temperature of the exhaust gas flowing from the diesel particulate filter 33 is provided downstream of the diesel particulate filter 33 of the casing 35.

An NOx sensor 57 for detecting NOx concentration in the exhaust gas is provided in the exhaust pipe 30 between the urea water injector 40 and an exhaust gas introduction section 45a of the low-pressure exhaust gas recirculation passage 45 for introducing the exhaust gas from the exhaust pipe 30.

An exhaust gas temperature sensor 58 (exhaust gas temperature detection unit) for detecting the temperature of the exhaust gas between the urea water injector 40 and the selective reduction catalyst 34 is provided in the exhaust pipe 30 near the urea water injector 40.

An NOx sensor 59 for detecting NOx concentration in the exhaust gas flowing out of the most downstream selective reduction catalyst 34 is provided in the exhaust pipe 30 downstream of the selective reduction catalyst 34 located most downstream.

An engine control unit 70 (control unit and change unit) is electrically connected to various sensors including the intake air temperature sensors 50 and 51, the oxygen concentration sensors 52 and 53, the exhaust gas temperature sensors 54, 55, 56, and 58, the NOx sensors 57 and 59, as well as various devices including the fuel injection nozzle 3, the electronic control throttle valves 22 and 27, the exhaust gas recirculation valves 16 and 48, and the urea water injector 40.

The engine control unit 70 is configured to include input/output devices, storage devices (ROM, RAM, nonvolatile RAM, etc.,), timers, the central processing unit (CPU), and the like. The engine control unit 70 receives information such as detection information and the accelerator operation amount information from the aforementioned sensors, and based on the various information, calculates the fuel injection amount, the fuel injection timing, the opening degree of the electronic control throttle valves 22 and 27, and the exhaust gas recirculation valves 16 and 48, the urea water injection amount, and the urea water injection timing, thereby to perform the operation control on the various devices and perform the operation control on the engine 1.

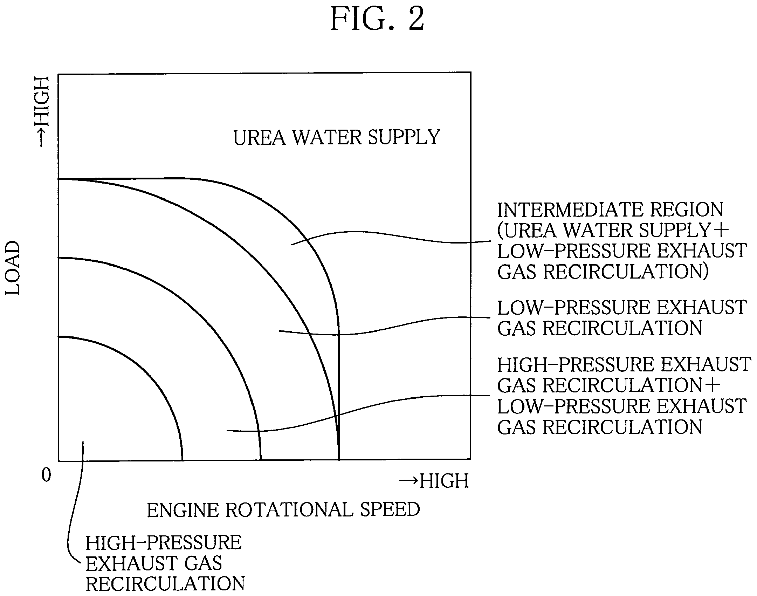

FIG. 2 is explanatory drawing illustrating a use region of the exhaust gas purifying apparatus.

As illustrated in FIG. 2, based on an operating state (rotational speed and load) of the engine 1, the engine control unit 70 performs three exhaust gas purifying apparatuses: high-pressure exhaust gas recirculation by the high-pressure exhaust gas recirculation passage 15, low-pressure exhaust gas recirculation by the low-pressure exhaust gas recirculation passage 45, and exhaust gas purification in the selective reduction catalyst 34 by the urea water supply.

For example, of the three exhaust gas purifying apparatuses, only the high-pressure exhaust gas recirculation is performed in the low-load low-speed region, only the low-pressure exhaust gas recirculation is performed in the medium-load medium-speed region, and only the urea water supply is performed in the high-load high-speed region. In addition, a region using both the high-pressure exhaust gas recirculation and the low-pressure exhaust gas recirculation is provided between the low-load low-speed region and the medium-load medium-speed region. Further, an intermediate region using both the low-pressure exhaust gas recirculation and the urea water supply is provided between the medium-load medium-speed region and high-load high-speed region.

Further, the present embodiment performs the operation control on the urea water injector 40 and the exhaust gas recirculation valve 48 based on the exhaust gas temperature in the intermediate region.

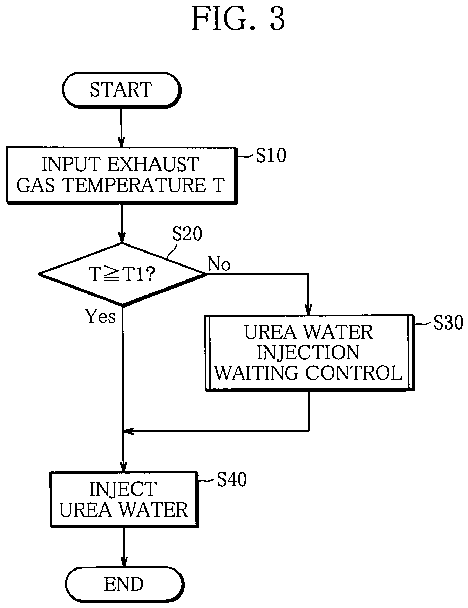

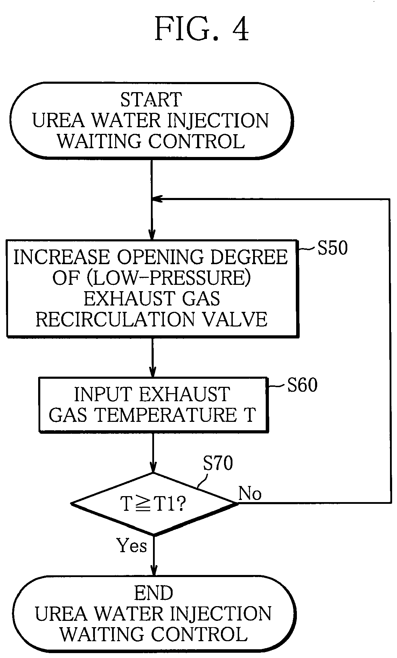

FIGS. 3 and 4 is a flowchart illustrating the operation control procedure of the engine control unit 70 for the urea water injector 40 and the exhaust gas recirculation valve 48 based on the exhaust gas temperature.

The above control is performed in the intermediate region.

First, in step S10, an exhaust gas temperature T is inputted from the exhaust gas temperature sensor 58. Then, the process moves to step S20.

In step S20, a determination is made as to whether or not the exhaust gas temperature T inputted in step S10 is greater than or equal to a predetermined temperature T1. The predetermined temperature T1 may be set to an exhaust gas temperature at which the urea water injected from the urea water injector 40 is sufficiently hydrolyzed into ammonia and reaches the selective reduction catalyst 34 at the most upstream side. If the exhaust gas temperature T is greater than or equal to the predetermined temperature T1, the process moves to step S40. If the exhaust gas temperature T is less than the predetermined temperature T1, the process moves to step S30.

In step S30, a urea water injection waiting control subroutine illustrated in FIG. 4 is executed. Then, the process moves to step S40.

In step S40, urea water is injected and supplied from the urea water injector 40. Then, the routine ends.

The urea water injection waiting control subroutine illustrated in FIG. 4 will be described.

First, in step S50, the urea water injection waiting control subroutine increases the opening degree of the exhaust gas recirculation valve 48 by a predetermined amount. Then, the process moves to step S60. Note that at this time, the opening degree of the electronic control throttle valve 22 may be reduced so as to increase the recirculation flow rate of the exhaust gas by the low-pressure exhaust gas recirculation passage 45.

In step S60, the exhaust gas temperature T is inputted from the exhaust gas temperature sensor 58. Then, the process moves to step S70.

In step S70, a determination is made as to whether or not the exhaust gas temperature T inputted in step S60 is greater than or equal to the predetermined temperature T1. If the exhaust gas temperature T is greater than or equal to the predetermined temperature T1, the subroutine ends. If the exhaust gas temperature T is less than the predetermined temperature T1, the process returns to step S50.

By the above described control, the present embodiment places the urea water supply from the urea water injector 40 in a wait state until the exhaust gas temperature T detected by the exhaust gas temperature sensor 58 in the intermediate region in which both the low-pressure exhaust gas recirculation and the urea water supply are used, namely, the exhaust gas temperature in the exhaust pipe 30 between the urea water injector 40 and the selective reduction catalyst 34 is greater than or equal to the sufficiently hydrolysable predetermined temperature T1. This can prevent unhydrolyzed urea water from flowing into the selective reduction catalyst 34. Thus, the present embodiment can suppress the urea water from being discharged outside the vehicle and can suppress the urea from depositing in the selective reduction catalyst 34 and in the exhaust pipe 30 located downstream thereof. In addition, the present embodiment can suppress wasteful injection and supply of the urea water and can suppress the amount of consumption of the urea water.

In addition, while waiting for urea water supply, the opening degree of the exhaust gas recirculation valve 48 increases, and hence the recirculation rate of the low-pressure exhaust gas increases. Thus, the ratio between the supply rate of the urea water and the recirculation rate of the low-pressure exhaust gas is changed to increase the recirculation rate of the low-pressure exhaust gas, which can suppress the NOx and the like from being discharged outside the vehicle even if the urea water supply is stopped. In addition, the NOx purification efficiency required of the selective reduction catalyst 34 can be reduced, and hence the catalyst volume of the selective reduction catalyst 34 can be reduced to be compact. Thus, the present embodiment can reduce the cost of the selective reduction catalyst 34 and improve mounting property on the vehicle.

Further, the exhaust gas purification performance can be ensured by increasing the low-pressure exhaust gas recirculation without rapidly increasing the catalyst temperature of the selective reduction catalyst 34, which can improve fuel efficiency and can reduce oil dilution in comparison with raising the catalyst temperature such as performing post-injection.

Further, in the intermediate region, the recirculation rate of the low-pressure exhaust gas may be set to a maximum limit based on the exhaust gas temperature T, and the ratio between the supply rate of the urea water and the recirculation rate of the low-pressure exhaust gas may be changed to supply urea water by an insufficient amount of reduced low-pressure exhaust gas recirculation, thereby to reduce NOx.

Thus, in a region of using both the low-pressure exhaust gas recirculation and the urea water supply, the recirculation rate of the low-pressure exhaust gas is set to a maximum limit to prioritize the low-pressure exhaust gas recirculation over the urea water supply, which can suppress the urea water consumption.

Note that the present invention is not limited to the aforementioned embodiment. For example, the above embodiment places the urea water injection in a wait state until the exhaust gas temperature T reaches the predetermined temperature T1, but may inject the urea water by a hydrolysable amount.

Note that the above embodiment uses both the low-pressure exhaust gas recirculation and the urea water supply in the intermediate region and changes the ratio between the recirculation rate of the low-pressure exhaust gas and the supply rate of the urea water in the intermediate region based on the exhaust gas temperature, but may change the ratio between the recirculation rate of the low-pressure exhaust gas and the supply rate of the urea water outside the intermediate region. For example, if the exhaust gas temperature T is greater than or equal to the predetermined temperature T1, the urea water may be supplied even in a region where the operating state of the engine 1 is less than or equal to the medium-speed medium-load, that is, the region set not to subject to urea water injection. Thus, in the case where the exhaust gas temperature T is high, even if the operating state of the engine 1 is less than or equal to the medium-speed medium-load, NOx can be purified by urea water supply and hence the exhaust gas purification efficiency can be improved.

Alternatively, the exhaust gas recirculation may be performed even in a region where the operating state of the engine 1 is set to high-speed high-load, that is, the region set not to subject to exhaust gas recirculation. Thus, the amount of NOx reduction purification in the selective reduction catalyst 34 can be suppressed by performing the exhaust gas recirculation even in the high-speed high-load state, which can not only reduce the amount of urea water consumption but also can suppress the volume of the selective reduction catalyst 34. Thus, the present embodiment can reduce the cost of the selective reduction catalyst 34 and improve mounting property on the vehicle.

As described above, the present embodiment does not select between the exhaust gas recirculation and the urea water supply only by the operating state of the engine 1, but selects between the exhaust gas recirculation and the urea water supply based on the exhaust gas temperature. Thus, particularly in a transient operation where the operating state of the engine 1 varies, the present embodiment can appropriately perform the exhaust gas purification by the urea water supply and the exhaust gas purification by the exhaust gas recirculation and hence can improve the exhaust gas purification efficiency.

Note that the present invention can be widely applied to an engine including both the exhaust gas recirculation apparatus and the exhaust gas purifying apparatus using the selective reduction catalyst and the ammonia precursor such as urea water described in the embodiment and solid ammonium salt as the exhaust gas purifying apparatus of the engine.

### Explanation of Reference Signs

1 engine
20 intake pipe (intake passage)
22 electronic control throttle valve (exhaust gas recirculation rate control unit)
30 exhaust pipe (exhaust passage) 34 selective reduction catalyst
40 urea water injector (ammonia precursor supply unit)
45 low-pressure exhaust gas recirculation passage (exhaust gas recirculation passage)
48 exhaust gas recirculation valve (exhaust gas recirculation rate control unit)
70 engine control unit (control unit, change unit)

## Claims

1. An exhaust gas purifying apparatus of an engine comprising:
a selective reduction catalyst (34) provided in an exhaust passage (30) of the engine (1);
an ammonia precursor supply unit (40) that supplies an ammonia precursor to an upstream side of the selective reduction catalyst (34) and breaks down the ammonia precursor in the exhaust passage (30) to cause the generated ammonia to flow into the selective reduction catalyst (34), thereby to allow the selective reduction catalyst (34) to reduce and purify nitrogen oxides in exhaust gas of the engine (1);
an exhaust gas recirculation passage (45) that introduces the exhaust gas from the exhaust passage (30) and recirculates the exhaust gas to an intake passage (20) of the internal combustion engine (1);
an exhaust gas recirculation rate control unit (48) that controls a flow rate of the exhaust gas recirculated into the intake passage (20) through the exhaust gas recirculation passage (45); and
the exhaust gas purifying apparatus of the engine **characterized by** further comprising:
a control unit (70) that sets a ratio between a supply rate of the ammonia precursor and a recirculation rate of the exhaust gas set based on an operating state of the engine (1), and, based on the ratio, controls the operation of the ammonia precursor supply unit (40) and the exhaust gas recirculation rate control unit (48),
an exhaust gas temperature detection unit (58) that detects an exhaust gas temperature in the exhaust passage (30) between the ammonia precursor supply unit (40) and the selective reduction catalyst (34); and
a change unit (70) that changes the ratio between the supply rate of the ammonia precursor and the recirculation rate of the exhaust gas set by the control unit (70) so that a reduction in the exhaust gas temperature detected by the exhaust gas temperature detection unit (58) reduces the supply rate of the ammonia precursor and increases the recirculation rate of the exhaust gas, wherein
the control unit (70) places the supply of the ammonia precursor in a wait state until the exhaust gas temperature is greater than or equal to a predetermined temperature allowing the ammonia precursor to be hydrolyzed, and causes the exhaust gas recirculation rate control unit (48) to increase the flow rate of the exhaust gas to be recirculated into the intake passage (20) while in the wait state.

2. The exhaust gas purifying apparatus of the engine according to claim 1, **characterized in that**
the control unit (70) sets the ratio so as to use both supply of the ammonia precursor and recirculation of the exhaust gas through the exhaust gas recirculation passage (45) in a predetermined operating region defined by rotational speed and load of the engine (1), and
the change unit (70) changes the ratio based on the exhaust gas temperature detected by the exhaust gas temperature detection unit (58) in the predetermined operating region.

3. The exhaust gas purifying apparatus of the engine according to claim 2, **characterized in that**, in the predetermined operating region, the change unit (70) sets the recirculation rate of the exhaust gas through the exhaust gas recirculation passage (45) to a maximum limit and changes the ratio so as to compensate for a shortage of reduction in the nitrogen oxides by recirculation of the exhaust gas by exhaust gas purification by supply of the ammonia precursor.

## Patentansprüche

1. Abgasreinigungsvorrichtung eines Motors, die aufweist:
einen selektiven Reduktionskatalysator (34), der in einem Abgaskanal (30) des Motors (1) vorgesehen ist;
eine Ammoniakvorläufer-Zufuhreinheit (40), die einen Ammoniakvorläufer einer vorgelagerten Seite des selektiven Reduktionskatalysators (34) zuführt und den Ammoniakvorläufer im Abgaskanal (30) zersetzt, um zu bewirken, dass das erzeugte Ammoniak in den selektiven Reduktionskatalysator (34) strömt, um dadurch dem selektiven Reduktionskatalysator (34) zu ermöglichen, Stickoxide im Abgas des Motors (1) zu reduzieren und zu reinigen;
einen Abgasrückführungskanal (45), der das Abgas aus dem Abgaskanal (30) einleitet und das Abgas zu einem Einlasskanal (20) des Verbrennungsmotors (1) rückführt;
eine Abgasrückführungsraten-Steuereinheit (48), die eine Durchflussrate des Abgases steuert, das in den Einlasskanal (20) durch den Abgasrückführungskanal (45) rückgeführt wird; und
wobei die Abgasreinigungsvorrichtung des Motors **dadurch gekennzeichnet ist, dass** sie ferner aufweist:
eine Steuereinheit (70), die ein Verhältnis zwischen einer Zufuhrrate des Ammoniakvorläufers und einer Rückführungsrate des Abgases auf der Grundlage eines Betriebszustands des Motors (1) einstellt und auf der Grundlage des Verhältnisses den Betrieb der Ammoniakvorläufer-Zufuhreinheit (40) und der Abgasrückführungsraten-Steuereinheit (48) steuert,
eine Abgastemperatur-Detektionseinheit (58), die eine Abgastemperatur im Abgaskanal (30) zwischen der Ammoniakvorläufer-Zufuhreinheit (40) und dem selektiven Reduktionskatalysator (34) detektiert; und
eine Änderungseinheit (70), die das durch die Steuereinheit (70) eingestellte Verhältnis zwischen der Zufuhrrate des Ammoniakvorläufers und der Rückführungsrate des Abgases ändert, so dass eine Verringerung der durch die Abgastemperatur-Detektionseinheit (58) detektierten Abgastemperatur die Zufuhrrate des Ammoniakvorläufers verringert und die Rückführungsrate des Abgases erhöht, wobei die Steuereinheit (70) die Zufuhr des Ammoniakvorläufers in einen Wartezustand versetzt, bis die Abgastemperatur mindestens eine vorbestimmte Temperatur ist, bei der der Ammoniakvorläufer hydrolysiert werden kann, und bewirkt, dass die Abgasrückführungsraten-Steuereinheit (48) die Durchflussrate des in den Einlasskanal (20) rückzuführenden Abgases während des Wartezustands erhöht.

2. Abgasreinigungsvorrichtung des Motors nach Anspruch 1, **dadurch gekennzeichnet, dass**
die Steuereinheit (70) das Verhältnis so einstellt, dass sie sowohl Zufuhr des Ammoniakvorläufers als auch Rückführung des Abgases durch den Abgasrückführungskanal (45) in einem vorbestimmten Betriebsbereich verwendet, der durch Drehzahl und Last des Motors (1) festgelegt ist, und
die Änderungseinheit (70) das Verhältnis auf der Grundlage der durch die Abgastemperatur-Detektionseinheit (58) detektierten Abgastemperatur im vorbestimmten Betriebsbereich ändert.

3. Abgasreinigungsvorrichtung des Motors nach Anspruch 2, **dadurch gekennzeichnet, dass** im vorbestimmten Betriebsbereich die Änderungseinheit (70) die Rückführungsrate des Abgases durch den Abgasrückführungskanal (45) auf einen maximalen Grenzwert einstellt und das Verhältnis so ändert, dass sie mangelnde Reduktion der Stickoxide durch Rückführung des Abgases durch Abgasreinigung mittels Zufuhr des Ammoniakvorläufers kompensiert.

## Revendications

1. Appareil de purification de gaz d'échappement d'un moteur comprenant :
un catalyseur de réduction sélective (34) prévu dans un passage d'échappement (30) du moteur (1) ;
une unité d'alimentation en précurseur d'ammoniac (40) qui amène un précurseur d'ammoniac à un côté en amont du catalyseur de réduction sélective (34) et décompose le précurseur d'ammoniac dans le passage d'échappement (30) pour amener l'ammoniac généré à s'écouler dans le catalyseur de réduction sélective (34), pour permettre ainsi au catalyseur de réduction sélective (34) de réduire et de purifier les oxydes d'azote dans le gaz d'échappement du moteur (1) ;
un passage de recirculation de gaz d'échappement (45) qui introduit le gaz d'échappement du passage d'échappement (30) et fait recirculer le gaz d'échappement vers un passage d'admission (20) du moteur à combustion interne (1) ;
une unité de commande de débit de recirculation de gaz d'échappement (48) qui commande un débit du gaz d'échappement recirculé dans le passage d'échappement (20) à travers le passage de recirculation de gaz d'échappement (45) ; et
l'appareil de purification de gaz d'échappement du moteur étant **caractérisé en ce qu'**il comprend en outre :
une unité de commande (70) qui détermine un rapport entre un débit d'alimentation du précurseur d'ammoniac et un débit de recirculation du gaz d'échappement déterminé en fonction d'un état de fonctionnement du moteur (1), et en fonction du rapport, commande le fonctionnement de l'unité d'alimentation en précurseur d'ammoniac (40) et de l'unité de commande de débit de recirculation de gaz d'échappement (48),
une unité de détection de température de gaz d'échappement (58) qui détecte une température de gaz d'échappement dans le passage d'échappement (30) entre l'unité d'alimentation en précurseur d'ammoniac (40) et le catalyseur de réduction sélective (34) ; et
une unité de changement (70) qui modifie le rapport entre le débit d'alimentation du précurseur d'ammoniac et le débit de recirculation du gaz d'échappement déterminé par l'unité de commande (70) de sorte qu'une réduction de la température de gaz d'échappement détectée par l'unité de détection de température de gaz d'échappement (58) réduit le débit d'alimentation du précurseur d'ammoniac et augmente le débit de recirculation du gaz d'échappement, dans lequel :
l'unité de commande (70) place d'alimentation du précurseur d'ammoniac dans un état d'attente jusqu'à ce que la température de gaz d'échappement soit supérieure ou égale à une température prédéterminée permettant au précurseur d'ammoniac d'être hydrolysé, et amène l'unité de commande de débit de recirculation de gaz d'échappement (48) à augmenter le débit du gaz d'échappement pour qu'il soit recirculé dans le passage d'admission (20) tout en étant à l'état d'attente.

2. Appareil de purification de gaz d'échappement du moteur selon la revendication 1, **caractérisé en ce que** :
l'unité de commande (70) détermine le rapport afin d'utiliser à la fois l'alimentation du précurseur d'ammoniac et la recirculation du gaz d'échappement à travers le passage de recirculation de gaz d'échappement (45) dans une région de fonctionnement prédéterminée définie par la vitesse de rotation et la charge du moteur (1), et
l'unité de changement (70) modifie le rapport en fonction de la température de gaz d'échappement détectée par l'unité de détection de température de gaz d'échappement (58) dans la région de fonctionnement prédéterminée.

3. Appareil de purification de gaz d'échappement du moteur selon la revendication 2, **caractérisé en ce que**, dans la région de fonctionnement prédéterminée, l'unité de changement (70) détermine le débit de recirculation du gaz d'échappement à travers le passage de recirculation de gaz d'échappement (45) à une limite maximum et modifie le rapport afin de compenser un manque de réduction d'oxydes d'azote par la recirculation du gaz d'échappement, par la purification de gaz d'échappement, par l'alimentation du précurseur d'ammoniac.
